(19) Europäisches Patentamt
European Patent Office
Office européen des brevets

(11) Veröffentlichungsnummer: **0 058 371**
**B1**

(12) # EUROPÄISCHE PATENTSCHRIFT

(45) Veröffentlichungstag der Patentschrift: **18.04.84**

(51) Int. Cl.[3]: **E 21 B 43/22**

(21) Anmeldenummer: **82100913.1**

(22) Anmeldetag: **09.02.82**

(54) **Verfahren zur Gewinnung von Öl aus unterirdischen Lagerstätten durch Emulsionsfluten.**

(30) Priorität: **18.02.81 DE 3105913**

(43) Veröffentlichungstag der Anmeldung: **25.08.82 Patentblatt 82/34**

(45) Bekanntmachung des Hinweises auf die Patenterteilung: **18.04.84 Patentblatt 84/16**

(84) Benannte Vertragsstaaten: **AT FR GB NL**

(56) Entgegenhaltungen:
**US - A - 4 110 228**

**TENSIDE DETERGENTS, Band 16, Nr. 5 1979 Carl Hanser Verlag MÜNCHEN (DE) D.BALZER u.a.: "Die Phasen-Inversions-Temperatur als Auswahlkriterium für Tenside bei der tertiären Erdölgewinnung"**
**TENSIDE DETERGENTS, Band 14, Nr.5 1977 Carl Hanser Verlag MÜNCHEN (DE) H.STACHE u.a.: "Carboxymethylierte Oxäthylate als Tenside für die tertiäre Erdölgewinnung"**
**TENSIDE DETERGENTS, Band 17, Nr.1 1980 Carl Hanser Verlag MÜNCHEN (DE) M.AKSTINAT: "Tenside und Polymere Wirkstoffe für die tertiäre Erdölgewinnung in hochsalinaren Systemen"**

(73) Patentinhaber: **CHEMISCHE WERKE HÜLS AG, - RSP Patente / PB 15 - Postfach 13 20, D-4370 Marl 1 (DE)**

(72) Erfinder: **Balzer, Dieter, Dr., Griesheimer Strasse 18, D-4370 Marl (DE)**
Erfinder: **Kosswig, Kurt, Dr., Hoechster Strasse 10, D-4370 Marl (DE)**

**EP 0 058 371 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Gewinnung von Öl aus unterirdischen Lagerstätten durch Emulsionsfluten

Bei der Gewinnung von Öl aus ölführenden Lagerstätten gelingt es im allgemeinen nur, einen Bruchteil des ursprünglich vorhandenen Öls durch primäre Gewinnungsverfahren zu fördern. Hierbei gelangt das Öl infolge des natürlichen Lagerstättendrucks an die Erdoberfläche. Nach Erschöpfung dieser Primärenergie kann durch sekundäre Massnahmen die Ölausbeute erhöht werden. Hierbei wird Wasser in eine oder mehrere Injektionsbohrungen der Lagerstätte eingepresst und das Öl zu einer oder mehreren Produktionsbohrungen getrieben und sodann an die Erdoberfläche gebracht. Dieses sogenannte Wasserfluten als Sekundärmassnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die gegenwärtige Ölverknappung volkswirtschaftlich dringend erforderlich ist, gelingt durch tertiäre Massnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs- oder Mischungsfluten, thermische Ölgewinnungsverfahren, Tensid- oder Polymerfluten bzw. als Kombination von mehreren der genannten Verfahren einordnen.

Thermische Gewinnungsverfahren beinhalten die Injizierung von Dampf oder heissem Wasser bzw. sie erfolgen als Insituverbrennung. Lösungs- oder Mischungsverfahren bestehen im Injizieren eines Lösungsmittels für das Erdöl in die Lagerstätte, wobei dies ein Gas und/oder eine Flüssigkeit sein kann.

Tensidflutprozesse – je nach Tensidkonzentration, gegebenenfalls Tensidtyp und Zusätzen unterscheidet man tensidgestütztes Wasserfluten, übliches Tensidfluten (Lowtension flooding), micellares Fluten und Emulsionsfluten – beruhen in erster Linie auf einer starken Erniedrigung der Grenzflächenspannung zwischen Öl und Flutwasser. In einigen Fällen jedoch, insbesondere in Gegenwart höherer Tensidkonzentrationen, entstehen Wasser-in-Öl-Emulsionen mit, verglichen zum Öl, deutlich erhöhter Viskosität, so dass hier das Tensidfluten auch auf eine Verkleinerung des Mobilitätsverhältnisses zielt. Dies ist besonders vorteilhaft bei Ölen mit nicht sehr geringer Viskosität, weil hierbei das Durchfingern und Passieren des Wassertriebs verringert und damit der Wirkungsgrad der Ölverdrängung erhöht wird.

Reines Polymerfluten beruht überwiegend auf dem zuletzt beschriebenen Effekt des günstigeren Mobilitätsverhältnisses zwischen Öl und nachflutendem Wasser.

Die vorliegende Erfindung bezieht sich auf ein Verfahren zur Gewinnung von Öl durch Emulsionsfluten, wobei als Emulgator ein anionisches Tensid verwendet wird. Dieses ist mit hochsalinaren Wässern bis zu 250 g/l Salzgesamtgehalt verträglich, wobei auch Erdalkaliionen zugegen sein können. Es hat sich sogar gezeigt, dass eine Menge von 2 g/l bis 15 g/l an Erdalkaliionen (hier gerechnet als $Ca^{2+}$) dem Verfahren sehr dienlich ist.

Die Wirkungsweise des Emulsionsflutens zielt einmal auf die Ölmobilisierung durch Erniedrigung der Grenzflächenspannung, wobei eine Phasenmischbarkeit im Rahmen des Mikroemulsionsflutens als Grenzfall aufgefasst werden kann. Zum anderen beruht das Emulsionsfluten auf einer Verbesserung der volumetrischen Flutwirkung durch eine Vereinheitlichung der Trägerpermeabilität. Die mehr oder minder viskose Emulsion dringt hierzu bevorzugt in die permeableren Trägerlagen ein und gestattet so ein besseres Erfassen der geringpermeablen Zonen durch das nachfolgende Flutmedium. In der Literatur wird meist diese zweite Wirkungsweise betont. So wird in der US-PS 3 527 301 und in der DE-PS 12 34 646 der Einsatz von Fettalkohol- bzw. Alkylphenoloxethylaten als Emulgatoren beschrieben, mit denen sich eine deutliche Erhöhung des Entölungsgrades erreichen lässt.

Diese Verbindungen haben bekanntlich den Vorteil der Verträglichkeit mit Salzen, auch mit höherwertigen Metallkationen. Grundlegende Laboruntersuchungen an hochpermeablen künstlichen Formationen haben jedoch gezeigt, dass bei der Verwendung dieser nichtionischen Tenside beim Emulsionsfluten extrem hohe Druckgradienten auftreten, die einen Feldeinsatz illusorisch machen (B. Höfling, Erdöl-Erdgas-Zeitschr. 81, 480 (1965).

Bei vielen neueren Verfahren, wie sie z.B. in DE-OS 24 56 860 oder den US-PSS 4 192 382 und 4 194 563 beschrieben sind, werden als Emulgatoren komplizierte Tensidgemische beansprucht, die bei nicht allzu hohen Temperaturen auch mit höher salinaren Wässern verträglich sind. Teilweise werden die Emulsionen in situ gebildet, wobei nacheinander die organische Phase und die wässrige Emulgatorlösung in die Formation injiziert werden. Tensidmischungen, die die Bildung optimaler Emulsionen ermöglichen, erniedrigen im allgemeinen nicht ausreichend die Grenzflächenspannung zwischen der Öl- und der Wasserphase und sind daher für die Mobilisierung des Restöls ungeeignet (US-PS 4 184 549). Daher sind bei den o.a. bekannten Verfahren zum Emulsionsfluten ausser den Tensidgemischen, die als Emulgatoren wirksam sind, noch andere Tenside oder Tensidgemische notwendig, die aufgrund ihrer hohen Grenzflächenaktivität ölmobilisierend wirken. Berücksichtigt man die Tatsache, dass unterschiedliche Tensidmoleküle mit der Gesteinsoberfläche unterschiedlich in Wechselwirkung treten, so ist sicher anzunehmen, dass sich die Zusammensetzung des Tensidgemisches beim Transport durch die Formation dauernd ändern wird, womit gleichzeitig die

sorgfältige Anpassung der Tensidkombination an die Lagerstätteneigenschaften eingebüsst wird.

Ein optimales Verfahren zum Emulsionsfluten setzt daher ein möglichst einheitliches Tensid voraus, das sowohl als Emulgator die Bildung stabiler Emulsionen gestattet als auch die Grenzflächenspannung der Grenzfläche Wasser/Öl ausreichend erniedrigt und damit ölmobilisierend wirkt.

Weiterhin muss das Tensid verträglich mit höher salinarem Wasser sein, wobei die Gegenwart von Erdalkaliionen keinen sehr nachteiligen Einfluss haben darf. Das Tensid muss über lange Zeiträume thermostabil sein und soll an der Gesteinsoberfläche unter Lagerstättenbedingungen nur geringfügig adsorbiert werden. Selbstverständlich dürfen beim Emulsionsfluten keine in praxi unbeherrschbaren Druckgradienten auftreten.

Diese Aufgabe wurde gelöst durch ein Verfahren, wie es in den Patentansprüchen dargestellt ist.

Carboximethylierte Alkyl- oder Alkylaryloxethylate besitzen eine gute Verträglichkeit selbst mit extrem hochsalinaren (z.B. 250 000 ppm Gesamtsalinität) Lagerstättenwässern. Durch zahlreiche Langzeitversuche wurde ihre Thermostabilität festgestellt. Ihre Herstellung ist einfach und wirtschaftlich. Die ölmobilisierende Wirkung in mittel- und hochsalinaren Lagerstättensystemen (10 000 bis 250 000 ppm Gesamtsalzgehalt) ist sehr gut [H.J. Neumann, DGMK BERICHTE, Bericht 164 (1978), D. Balzer und K. Kosswig, Tenside Detergents 16, 256 (1979)].

Überraschend wurde gefunden, dass diese Verbindungen in Gegenwart von hochsalinarem Lagerstättenwasser und Rohöl oder Kohlenwasserstoffen die Bildung stabiler Emulsionen gestatten und dass letztere, in restölenthaltende Modellformation injiziert, zu einer weitgehend quantitativen Entölung führen. Die bei dieser Verfahrensweise aufzuwendenden Tensidmengen waren signifikant geringer als bei normalem Tensidfluten, bei dem carboximethylierte Alkyl- bzw. Alkylaryloxethylate dispergiert in Lagerstättenwasser injiziert werden. Weiterhin sehr überraschend war, dass dieses Emulsionsflut-Verfahren ebenfalls ausgezeichnete Entölungsergebnisse lieferte, wenn carboximethylierte Oxethylate mit einem Carboximethylierungsgrad von annähernd 100% eingesetzt wurden. Damit wurde ein praktisch rein anionisches, relativ einheitliches Tensid gefunden, das beim Emulsionsfluten alle hier entscheidenden Funktionen übernehmen kann. Gegenüber praktisch allen in der Literatur beschriebenen Verfahren zum Emulsionsfluten besitzen die carboximethylierten Oxethylate mit einem Carboximethylierungsgrad von nahezu 100% als Emulgatoren den grossen Vorteil der Einheitlichkeit, so dass hier die Wahrscheinlichkeit für ein chromatographisches Auftrennen der Tensidmischung in ihre ionischen und nichtionischen Komponenten und damit eine unkontrollierte Änderung der Phasenverhältnisse beim Transport des Tensidslugs von der Injektions- zur Produktionssonde äusserst gering wird. Ein weiterer Vorteil dieses Verfahrens besteht darin, dass keine unbeherrschbar hohen Druckgradienten auftreten, vorausgesetzt das Tensid wurde an die Lagerstättenverhältnisse angepasst. Kriterium dieser Anpassung ist die Phasen-Inversionstemperatur (PIT) sowohl der eingepressten Emulsion als auch der des Lagerstättensystems: Rohöl, Formationswasser, Tensid und gegebenenfalls Zusätze, deren Werte 0 bis 10°C oberhalb der Lagerstättentemperatur liegen sollen.

Die Phasen-Inversionstemperaturen (PITs) werden mit Hilfe der Messung der elektrischen Leitfähigkeit bestimmt. Hierzu wird einmal eine Emulsion bestehend aus Rohöl (gegebenenfalls Lebendöl) und dem Formationswasser der betreffenden Lagerstätte (Phasenverhältnis 1:1) und dem Tensid (2 bzw. 5%, bezogen auf die wässrige Phase) sowie gegebenenfalls Zusätzen hergestellt. Soll eine andere als diese Emulsion zur Tertiärentölung injiziert werden, wobei der Unterschied nur in der Ölphase bestehen kann, so ist diese Emulsion ebenfalls nach den obengenannten Angaben herzustellen. Die elektrische Leitfähigkeit der einen bzw. beider Emulsionen wird sodann in Abhängigkeit von der Temperatur gemessen.

Beim Durchlaufen der Phasen-Inversions-Temperatur (PIT) von niedriger zu höherer Temperatur schlägt eine o/w-Emulsion in eine w/o-Emulsion um und umgekehrt (vgl. D. Balzer u.a., Tenside Detergents 16 (1979), Seite 256, linke Spalte, vorletzter Absatz), wobei die elektrische Leitfähigkeit sprungartig sinkt bzw. steigt. Genau genommen ist dies ein Temperaturbereich von wenigen Grad C. Registriert als PIT wird die Temperatur, bei der die elektrische Leitfähigkeit den Mittelwert zwischen oberem (o/w) und unterem (w/o) Niveau erreicht.

Die vorliegende Erfindung bezieht sich auf den Einsatz von carboximethylierten Oxethylaten als ölmobilisierend und emulgierend wirkende Tenside. Man kann diese Verbindungen nach der DE-PS 24 18 444 durch Umsetzung von Oxethylaten der Formel $R-(O-CH_2-CH_2)_nOH$ mit einem Salz der Chloressigsäure in Gegenwart von Alkalihydroxid oder Erdalkalihydroxid herstellen. Aber auch andere Herstellungsverfahren sind geeignet. R bedeutet hierbei einen gesättigten oder ungesättigten, geradkettigen oder verzweigten Alkylrest mit 6 bis 20, vorzugsweise 8 bis 16 C-Atomen, oder einen Alkylarylrest mit 3 bis 14 C-Atomen im Alkylrest. n kann Werte von 1 bis 30, vorzugsweise von 1 bis 20, annehmen. Das Kation kann Natrium, Kalium, Lithium, Ammonium, Calcium oder Magnesium sein. Als Alkohole, deren Oxethylate den Carboximethylaten zugrunde liegen, lassen sich z.B. einsetzen: Hexylalkohol, Octylalkohol, Nonylalkohol, Decylalkohol, Undecylalkohol, Lauryl-, Tridecyl-, Myristil-, Palmityl- und Stearylalkohol, aber auch ungesättigte Alkohole, wie z.B. Oleylalkohol. Die Alkylkette kann dabei normal- oder verzweigtkettig sein. Besonders zweckmässig werden handelsübliche Gemische dieser Alkohole herangezogen, vorzugsweise mit Kettenlängen, die sich um nicht mehr als 4 C-Zahlen unterscheiden. Als Alkylphenole lassen sich z.B. einsetzen: Butylphenol, Pentylphenol, Hexylphenol, Octylphenol, Nonylphenol, Decylphenol, Undecylphenol, Dodecylphenol, Tridecylphenol, Tetradecylphenol sowie die entsprechenden Dialkylphenole. Die Alkylkette kann normal- oder verzweigtkettig sein. Insbesondere lassen sich handelsübliche Gemische solcher Alkylphenole einsetzen, vorzugsweise mit Kettenlängen, die sich um nicht mehr als 4 C-Zahlen unterscheiden.

Die Oxethylierung kann in Gegenwart katalytischer Mengen Alkalihydroxid mit 1 bis 30, vorzugsweise 1 bis 20 Mol, Ethylenoxid/Mol Hydroxylverbindung durchgeführt werden. Die entstehenden Gemische haben annähernd eine Poisson-Verteilung der Homologen. Entsprechend ihrer Herstellung enthalten die carboximethylierten Oxethylate gewöhnlich noch gewisse Mengen nicht umgesetztes Oxethylat. Mit der Formel $R\text{-}(OCH_2\text{-}CH_2)_n\text{-}OCH_2\text{-}COOM$ ist daher meist ein Gemisch mit unterschiedlichen Mengen an nicht umgesetztem Oxethylat gemeint. Demgemäss lässt sich ein Carboximethylierungsgrad definieren. Es hat sich gezeigt, dass Mischungen mit einem Carboximethylierungsgrad zwischen 10 und 100%, vorzugsweise zwischen 40 und 100%, und insbesondere zwischen 70 und 100%, das Öl wirksam zu verdrängen vermögen. Besonders wirksam sind Mischungen mit Carboximethylierungsgraden von 90 bis 100%. Mit der Angabe % sind stets Gewichtsprozente gemeint.

Die beschriebenen Mischungen aus anionischem und teilweise nichtionischem Tensid, carboximethylierte Oxethylate genannt, sind in üblichen Lagerstättenwässern löslich oder zumindest gut dispergierbar, wobei keinerlei Ausfällungen beobachtet werden.

Bei ihrer Auswahl kann man erfindungsgemäss folgendermassen vorgehen: Bei Kenntnis der Lagerstättentemperatur bzw. gegebenenfalls eines Temperaturbereichs wird aus dem Rohöl, dem Formationswasser sowie gegebenenfalls dem Gas der Lagerstätte und einem geeignet scheinenden carboxmethylierten Oxethylat der o.a. Formel orientierend die PIT gemessen. Diese Messung ist gegebenenfalls mit weiteren Tensiden dieser Klasse und gegebenenfalls Zusätzen zu wiederholen.

Auf der Basis der Messergebnisse erfolgt das Massschneidern des carboximethylierten Oxethylats, dessen ölmobilisierende Wirksamkeit für das betreffende Lagerstättensystem durch einen oder mehrere Vorversuche in einer Sandschüttung als Modellformation oder an Originalbohrkernen selbst verifiziert werden kann.

Die Natriumsalze der carboximethylierten Oxethylate, die durch Umsetzung von Oxethylaten mit Chloressigsäure bei Gegenwart von Natronlauge hergestellt werden, bieten mehrere Ansatzpunkte für die «Molekulararchitektur» mit dem Ziel, in einem bestimmten System eine gewünschte Phasen-Inversionstemperatur einzustellen.

$$R\text{-}(OCH_2CH_2)_n\text{-}OH + ClCH_2COOH \xrightarrow[-NaCl\text{-}H_2O]{+2\,NaOH} R\text{-}(OCH_2CH_2)_n\text{-}O\text{-}CH_2COONa.$$

| R | n | Umsatz |
|---|---|---|
| variabel | variabel | variabel |

Die Salze der carboximethylierten Oxethylate setzen sich aus drei variablen Bausteinen zusammen: dem hydrophoben Rest R, der Oxethylatkette und der Carboximethylgruppe, deren Anteil in dem erhaltenen Produktgemisch durch Steuerung des Umsatzes des Ausgangsoxethylats mit Chloressigsäure in weiten Grenzen verändert werden kann.

Einen Eindruck von dem Einfluss des Alkylrestes auf die Phasen-Inversionstemperatur in einem bestimmten System vermittelt die Tabelle 1.

Tabelle 1
Abhängigkeit der PIT von der Länge des Alkylrestes bei den Natriumsalzen carboximethylierter Fettalkoholoxethylate mit 4,4 EO und beim Carboximethylierungsgrad (CM), von 65%; Rohöl A (siehe D. Balzer und K. Kosswig, loc. cit.), Formationswasser A (siehe D. Balzer und K. Kosswig, loc. cit.), Phasenverhältnis 1:1,2% Tensid.

| C-Zahl im Alkylrest | PIT (°C) |
|---|---|
| 12 | 74 |
| 13* | 53 |
| 14 | 41 |
| 16 | 37 |

* 1:1-Mischung aus $C_{12}$ und $C_{14}$.

Die Abhängigkeit der Phasen-Inversionstemperatur von Rohölemulsionen (wie Tabelle 1) vom Oxethylierungsgrad (EO) bei carboximethylierten Nonylphenoloxethylaten (CM ca. 75%) im EO-Gradbereich zwischen etwa 5 und 7 ist linear, der Koeffizient mit ca. +30°C/EO-Grad ist ausserordentlich stark ausgeprägt.

Die Abhängigkeit der PIT dieser Emulsionen (Rohöl A, Formationswasser A, carboximethyliertes Nonylphenoloxethylat mit 6 EO, 2% Tensidkonzentration, vom Carboximethylierungsgrad (CM) ist in dem für das Verfahren interessanten Bereich von 70 bis 100% ebenfalls linear. Der

Koeffizient beträgt hier jedoch nur ca. +0,5°C/%CM.

Mit diesen Abhängigkeiten wird demonstriert, welche Variabilität die Klasse der carboximethylierten Oxethylate bezüglich der Anpassung an eine Lagerstätte bietet.

Die zu injizierende Emulsion kann nun aus dem Original-Rohöl, dem Formationswasser, dem Tensid sowie gegebenenfalls Zusätzen nach den gängigen Verfahren der Emulsionszubereitung hergestellt werden (vgl. P. Becher, Emulsions Theory and Practice, New York 1965), wobei keine sonderlich hohen Scherkräfte benötigt werden. Es ist auch möglich, das Gemisch, bestehend aus Öl, Wasser, Tensid sowie gegebenenfalls Zusätzen auf PIT zu erwärmen, und die sich dann bei mildem Rühren bildende, aus sehr feinen Tröpfchen bestehende Emulsion durch schnelles Abkühlen zu stabilisieren. Die Emulsionen sind bei Temperaturen $\geqq$15°C unterhalb der PIT relativ stabil, gegebenenfalls empfiehlt sich bei sehr hohen Salinitäten leichtes Rühren im Vorratsgefäss.

Statt des Originalrohöls können zur Herstellung der erfindungsgemässen Emulsion auch andere Rohöle, Rohölgemische, teilweise raffinierte Rohölfraktionen, Gasöle, Kerosin oder Benzine sowie deren Gemische mit Rohöl verwendet werden. Geeignet als organische Phase der erfindungsgemässen Emulsion sind auch Gemische aus reinen Kohlenwasserstoffen; aus wirtschaftlichen Überlegungen werden sie jedoch kaum eingesetzt werden.

Das Volumen der zu injizierenden Emulsion, ihr Phasenverhältnis, ihr Tensidgehalt und eventuelle Zusätze sowie ferner die Art und Grösse der die Mobilität kontrollierenden Polymerlösung können anhand von Modellflutversuchen optimiert werden.

Aufgrund dieser Vorversuche wird die Emulsion mit Hilfe von Injektionspumpen in die Lagerstätte eingebracht. Hierbei kann die Emulsion entweder kontinuierlich oder in Form eines Slugs, d.h. eines eng begrenzten Volumens von 0,02 bis 2 PV (= Porenvolumen der Lagerstätte) eingepresst werden. Die Grösse des Emulsionsslugs richtet sich vor allem nach der Tensidkonzentration und nach der Wirtschaftlichkeit. Die Emulgatorkonzentration, bezogen auf die wässrige Phase, beträgt i.a. 0,2 bis 30%, vorzugsweise 1 bis 20%. Das Phasenverhältnis der Emulsion Öl/Wasser wird i.a. 1:20 bis 4:1 sein.

Zweckmässigerweise geht dem Emulsionsfluten ein Wasserfluten voraus, wobei als Flutflüssigkeit das produzierte Formationswasser eingesetzt wird. Die Grösse dieses Wasserslugs beträgt 0,01 bis 4 PV, vorzugsweise 0,05 bis 1,0 PV. Dem Emulsionsslug nachgeschaltet kann man sowohl aus Gründen der Mobilitätskontrolle als auch zum Schutz der Emulsion vor eindringendem Formationswasser einen Polymerslug in die Lagerstätte injizieren. Hierzu wird ein Polymer oder Polymergemisch in einer solchen Konzentration in dem Formationswasser gelöst, dass die Viskosität 2- bis 6mal so hoch ist wie die des Öls. Bei Lagerstätten mittlerer und höherer Salinität (3 bis 28% Gesamtsalinität) kommen hier insbesondere Biopolymere, wie Polysacharide oder Cellulosederivate, die in Gegenwart der erhöhten Salzkonzentrationen noch eine ausreichende Viskosität besitzen und keine Fällungen zeigen, in Frage.

Bei Formationswässern, die relativ arm an Erdalkaliionen sind, kann es sich als zweckmässig erweisen, der Emulsion sowie dem vor- und nachgefluteten Formationswasser lösliche Erdalkalisalze zuzusetzen. Bei der Anpassung des Tensids an die Lagerstätte, d.h. also bei der Messung der PIT, müssen diese Zusätze berücksichtigt werden.

Zweckmässigerweise schliesst sich an das Injizieren der Polymerlösung normales Wasserfluten an. Dieses wird solange fortgesetzt, wie sich wirtschaftlich Öl gewinnen lässt.

Die nachfolgenden Beispiele sollen das erfindungsgemässe Verfahren erläutern (m/d bedeutet m/Tag):

Beispiel 1

Mit diesem Beispiel soll gezeigt werden, dass mit carboximethylierten Nonylphenoloxethylaten hergestellte Rohölemulsionen beim Fluten durch eine künstliche Formation nicht gebrochen werden, obwohl die dauernde Wasseraufnahme (und bei Entölungsversuchen die Ölaufnahme) sowie besonders die Erniedrigung der Tensidkonzentration infolge von Adsorptionsvorgängen die Stabilität in hohem Masse belasten. Zur Herstellung der künstlichen Formation wurde ein thermostatisierbares Hochdruckrohr von 70 cm Länge und 5 cm Durchmesser, versehen mit Temperaturmesseinrichtung und Manometer, beidseitig verschliessbar durch Gewindeverschlüsse mit Kapillareingang und Druckhalteventilausgang mit kantengerundetem Quarzsand beschickt. Sodann wurde die Sandschüttung mittels einer Hochdruckdosierpumpe mit Formationswasser A gesättigt und durch einen Thermostaten die gewünschte Temperatur eingestellt.

Mit Hilfe eines Drucktransmitters wurde die Permeabilität der Sandschüttung bestimmt. In diese Modellformation wurden mit einer Flutgeschwindigkeit von ca. 1 m/d 0,44 PV (1 PV ca. 750 ml) einer Emulsion bestehend aus Rohöl A, Formationswasser A (Phasenverhältnis 1:1) und 9,4 g (5,5%, bezogen auf die wässrige Phase) carboximethyliertem Nonylphenoloxethylat mit ca. 6 Molen Ethylenoxid/Mol und einem Carboximethylierungsgrad (CM) von ca. 80% injiziert. Mit gleicher Flutgeschwindigkeit wurden anschliessend 0,4 PV Polymerlösung und darauf ca. 3 PV Formationswasser A eingeflutet.

Die Lagerstättentemperatur betrug 55°C und lag damit im Bereich der PIT (ca. 56°C), womit die Stabilität der Emulsion zusätzlich belastet wurde. Der Lagerstättendruck betrug 60 bar, die Porosität der künstlichen Formation ca. 47%, ihre Permeabilität ca. 1100 mD. Das Formationswasser A enthielt ca. 20% NaCl, 0,1% KCl, 1,2% $CaCl_2$ und 0,4% $MgCl_2$. Als Polymer diente Hydroxiethylcel-

lulose (0,25%, gelöst in Formationswasser A, Viskosität bei 25°C ca. 60 mPa·s). Als Rohöl wurde ein paraffinbasisches Öl mit $n_D^{20}$~1,486, $d_{20}$~0,863 g/cm³ und $n_{20}$~19 mPa·s verwendet. Von 172 ml Öl, die als Emulsion in die Sandpackung eingeflutet wurden, liessen sich 1,6 ml abscheiden und 117 ml in emulgierter Form produzieren. Ausgeflutet wurden jedoch nur 3,6 g Tensid. In der Sandpackung liessen sich 46 ml Rohöl und 5,4 g Tensid – relativ homogen verteilt – analytisch nachweisen.

Beispiel 2
Eine künstliche Formation wie in Beispiel 1 wurde hergestellt, mit Formationswasser A gesättigt sowie die Permeabilität gemessen. Sodann wurde mit Rohöl A gesättigt, wobei gleichzeitig der Haftwassergehalt bestimmt wurde. Nunmehr setzte das Wasserfluten mit einer Flutgeschwindigkeit von ca. 2 m/d ein. Nach Einfluten von ca. 1,5 PV Formationswasser, wobei ein Verwässerungsgrad von 98 bis 100% erzielt wurde, wurde die Emulsion als Slug injiziert. Es folgten als Slug die Polymerlösung (0,4 PV) und ca. 3,0 PV Formationswasser. Tensid-, Polymer- und das anschliessende Nachfluten mit Formationswasser erfolgten mit einer Flutgeschwindigkeit von ca. 1 m/d.

Die Porosität der Formation betrug 49%, die Permeabilität 1600 mD, der Haftwassergehalt 26% und die Lagerstättentemperatur 46°C.

0,44 PV einer Emulsion (Rohöl A, Formationswasser A, Phasenverhältnis 1:1, 10,1 g (6,6%, bezogen auf die wässrige Phase) carboximethyliertes Nonylphenoloxethylat mit 5,5 Molen Ethylenoxid/Mol, Carboximethylierungsgrad ca. 80%) wurden eingesetzt. Die PIT dieser Emulsion betrug 49°C. Durch die Wasserfluten wurde eine Entölung von 76% erreicht, die sich nach weiteren 1,3 PV nach Beginn des Emulsionsflutens um 24% auf 100% Gesamtentölung steigern liessen, wobei die Verwässerung bis auf Werte von 40% zurückging. Während des Transportes der durch die Emulsion erzeugten Ölbank wurde ein mittlerer Druckgradient von 0,5 bar/m gemessen.

4,5 g Tensid relativ homogen verteilt über die Sandpackung wurden analytisch nachgewiesen.

Beispiel 3 (Vergleichsbeispiel)
In diesem Beispiel wird die Tertiärentölung durch normales Tensidfluten erreicht.

Eine Formation wie in Beispiel 2 wurde hergestellt, mit Formationswasser A benetzt und mit Rohöl A gesättigt (Porosität 48%, Permeabilität 1200 mD, Haftwassergehalt 24%, Lagerstättentemperatur 44°C). Das Wasserfluten erbrachte eine Entölung von maximal 77%. Durch Einfluten von 0,2 PV Tensidlösung (10,3 g carboximethyliertes Nonylphenoloxethylat mit ca. 5,5 Molen Ethylenoxid/Mol, CM ca. 80%, dispergiert in Formationswasser A, PIT der Rohölemulsion 49°C) nachgeschalteter Polymerlösung und Formationswasser wie in Beispiel 2, liess sich die Entölung nach weiteren 1,4 PV nach Beginn des Tensidflutens um 19% auf 96% steigern. Während des Transportes der durch das Tensid erzeugten Ölbank in der Formation wurde ein mittlerer Druckgradient von 0,6 bar/m gemessen. Nach dem Flutversuch wurde in der künstlichen Formation eine Tensidmenge von 7,3 g festgestellt. Dies ist eine deutlich höhere retendierte Menge als in Beispiel 2.

Beispiel 4 (Vergleichsbeispiel)
Bei praktisch identischen Bedingungen, Substanzen und Verfahrensschritten wie in Beispiel 2, jedoch bei einer eingestellten Lagerstättentemperatur von 60°C (PIT betrug wie im Beispiel 2 49°C) wurde dieses Vergleichsbeispiel durchgeführt. Durch Wasserfluten wurde eine Entölung von 76% erreicht, die nach weiteren 1,2 PV nach Beginn des Emulsionsflutens sich auf 100% Gesamtentölung steigern liessen. Jedoch wurde hierbei ein mittlerer Druckgradient von 19 bar/m gemessen.

Ein solcher Druckgradient würde bei Übertragung in das Feld zu Drucken weit oberhalb des petrostatischen Druckes führen und damit den Einsatz der Tenside bei der tertiären Erdölförderung ausschliessen.

Beispiel 5
Bei praktisch identischen Bedingungen und Verfahrensschritten wie in Beispiel 2, jedoch mit 0,5 PV einer Emulsion bestehend aus 86% n-Dodecan und 14% Toluol (Gew.-%), Formationswasser A (Phasenverhältnis 1:1) und 12 g (6,6%) carboximethyliertem Nonylphenoloxethylat mit 5,5 Molen Ethylenoxid/Mol und einem Carboximethylierungsgrad von ca. 80% wurde dieses Beispiel durchgeführt. Die Lagerstättentemperatur war 46°C; die PIT's sowohl der injizierten Emulsion als auch der des Lagerstättensystems A betrugen 49°C. Durch Wasserfluten wurde eine Entölung von 78% erzielt, die nach weiteren 1,2 PV nach Beginn des Emulsionsflutens auf 100% Gesamtentölung gesteigert wurden. Während der Tertiärölförderung wurde ein mittlerer Druckgradient von 0,8 bar/m gemessen.

Beispiel 6
Eine enger gepackte künstliche Formation wurde analog zu Beispiel 2 hergestellt, mit Formationswasser A benetzt und mit Rohöl A gesättigt (Porosität 42%, Permeabilität 310 mD, 26% Haftwassergehalt, Lagerstättentemperatur 53°C). Nach dem Wasserfluten, das zu einer Entölung von 69% führte, wurde ein Emulsionsslug von 0,25 PV bestehend aus Rohöl A, Formationswasser A (Phasenverhältnis 1:1) und 5,3 g carboximethyliertem Nonylphenoloxethylat (6,6%) mit ca. 6 Molen Ethylenoxid/Mol und einem Carboximethylierungsgrad von 99% (PIT der Rohölemulsion 56°C) mit einer Flutgeschwindigkeit von ca. 1,1 m/d injiziert, dem wie in Beispiel 2 0,4 PV Polymerlösung und ca. 3 PV Formationswasser folgten. Durch die Emulsion wurde nach ca. 1,3 PV nach Beginn des Emulsionsflutens eine Gesamtentölung von 100% erzielt. Während des Transportes der Ölbank durch die Formation wurde ein mittlerer Druckgradient von etwa 1,5 bar/m registriert.

3,2 g Tensid homogen verteilt über die Sandpakkung wurden nach dem Fluten nachgewiesen.

Beispiel 7
Eine Formation ähnlich wie in Beispiel 6 (Porosität 42%, Permeabilität 240 mD) wurde mit Formationswasser B benetzt und anschliessend mit Rohöl B gesättigt. Der Haftwassergehalt betrug 26%, die Temperatur 41°C. Nach dem Fluten mit Formationswasser B, das zu einer Entölung von 68% führte, wurde ein Emulsionsslug von 0,3 PV bestehend aus Rohöl B, Formationswasser B (Phasenverhältnis 1:1) und 7 g carboximethyliertem Nonylphenoloxethylat (6,6%) mit ca. 5 Molen Ethylenoxid/Mol und einem Carboximethylierungsgrad von 97% (PIT der Rohölemulsion 43°C) mit einer Flutgeschwindigkeit von 1,2 m/d injiziert, dem analog Beispiel 2 Polymerslug und anschliessendes Fluten mit Formationswasser B folgten. Durch die Emulsion wurde nach ca. 1 PV nach Beginn des Emulsionsflutens eine Gesamtentölung von 100% erzielt, wobei die Verwässerung bis auf 20% zurückging. Es wurde ein mittlerer Druckgradient von ca. 2 bar/m gemessen.

Formationswasser B enthält ca. 10% NcCl, 2,2% $CaCl_2$, 0,5% $MgCl_2$ und geringe Mengen an KCl und $SrCl_2$. Rohöl B ist paraffinbasisch, $n_D^{20}$: 1,480, Dichte $\varphi_{20} \approx 0,86$, Viskosität $\eta_{20} \approx$ mpa·s.

Beispiel 8
Eine Formation ähnlich wie in Beipiel 2 (Porosität 43%, Permeabilität 1400 mD) wurde mit Formationswasser A benetzt und anschliessend mit Rohöl A gesättigt. Der Haftwassergehalt betrug 27%, die Versuchstemperatur 54°C. Nach dem Fluten mit Formationswasser, das zu einer Entölung von 72% führte, wurde ein Emulsionsslug von 0,3 PV bestehend aus Rohöl A, Formationswasser A (Phasenverhältnis 1:1) und 73, g (= 6,6%) carboximethyliertes Alfol-1214-oxethylat mit 4,5 Molen Ethylenoxid/Mol, CM 94%, PIT 56°C) mit einer Flutgeschwindigkeit von 1,2 m/d injiziert, dem analog Beispiel 1 0,4 PV Polymerlösung und ca. 3 PV Formationswasser folgten. Durch die Emulsion wurde nach ca. 1,3 PV eine Geamtentölung von 100% erzielt. Es wurde ein mittlerer Druckgradient von ca. 0,9 bar/m gemessen.

Beispiel 9
Eine Formation ähnlich wie in Beispiel 2 (Porosität 41%, Permeabilität 650 mD) wurde mit Formationswasser A benetzt und anschliessend mit Rohöl A gesättigt. Der Haftwassergehalt betrug 21%, die Versuchstemperatur 61°C. Nach dem Fluten mit Formationswasser, das zu einer Entölung von 68% führte, wurde ein Emulsionsslug von 0,3 PV bestehend aus Rohöl A, Formationswasser A (Phasenverhältnis 1:1) und 7,2 g (6,6%) carboximethyliertes Alfol-16-oxethylat mit 7 Mol Ethylenoxid/Mol, CM 90%, PIT 65°C) mit einer Flutgeschwindigkeit von 1,2 m/d injiziert, dem 0,4 PV Polymerlösung - vgl. Beispiel 1 - und ca. 3 PV Formationswasser A folgten. Es wurde eine Gesamtentölung von 87% erzielt, der mittlere Druckgradient betrug ca. 0,8 bar/m.

Die Förderung des Tertiäröls erfolgte bei den Beispielen 2 bis 9 weitgehend emulsionsfrei, da der Tensiddurchbruch erst nach dem Ausfluten der Ölbank eintrat.

**Patentansprüche**

1. Verfahren zur Gewinnung von weitgehend emulsionsfreiem Öl aus einer unterirdischen Lagerstätte mittlerer oder hoher Salinität durch Einpressen einer Emulsion in eine Injektionsbohrung, dadurch gekennzeichnet, dass als Emulgator carboxmethyliertes Oxethylat der Formel $R-(OCH_2CH_2)_n-OCH_2-COOM$, in der R einen linearen oder verzweigten aliphatischen Rest mit 6 bis 20 Kohlenstoffatomen oder einen gegebenenfalls disubstituierten alkylaromatischen Rest mit 3 bis 14 Kohlenstoffatomen in der Alkylgruppe, n 1 bis 30 und M ein Alkali- oder Erdalkali-Metallion oder Ammonium bedeutet, verwendet wird, das so ausgewählt wird, dass die Phasen-Inversionstemperatur des Systems Lagerstättenöl/Formationswasser/Tensid/gegebenenfalls Zusätze 0 bis 10°C oberhalb der Lagerstättentemperatur liegt.

2. Verfahren nach Anspruch 1, dadurch gekennzeichnet, dass die Phasen-Inversionstemperatur des Systems Rohöl/Formationswasser/Tensid/gegebenenfalls Zusätze 1 bis 5°C oberhalb der Lagerstättentemperatur liegt.

3. Verfahren nach den Ansprüchen 1 und 2, dadurch gekennzeichnet, dass Emulgatorkonzentrationen von 0,1 bis 30%, bezogen auf die wässrige Phase, verwendet werden.

4. Verfahren nach den Ansprüchen 1 bis 3, dadurch gekennzeichnet, dass als wässrige Phase der Emulsion das Formationswasser und als organische Phase das Rohöl der Lagerstätte verwendet wird.

5. Verfahren nach Anspruch 4, dadurch gekennzeichnet, dass als Zusätze in Formationswasser lösliche Erdalkalisalze in Mengen von 0,1 bis 3% eingesetzt werden.

6. Verfahren nach den Ansprüchen 1 bis 5, dadurch gekennzeichnet, dass die Phasen-Inversionstemperatur der einzupressenden Emulsion 0 bis 10°C oberhalb der Temperatur der Lagerstätte liegt.

7. Verfahren nach den Ansprüchen 1 bis 6, dadurch gekennzeichnet, dass vor der Injektion der Emulsion 0,05 bis 4 Porenvolumen Formationswasser in die Lagerstätte eingepresst werden.

8. Verfahren nach den Ansprüchen 1 bis 7, dadurch gekennzeichnet, dass nach dem Injizieren der Emulsion Formationswasser in die Lagerstätte eingepresst wird.

9. Verfahren nach den Ansprüchen 1 bis 8, dadurch gekennzeichnet, dass bei dem als Tensid eingesetzten carboximethylierten Oxethylat das Mischungsverhältnis des anionischen zum nichtionischen Tensid 100:0 bis 40:60 beträgt.

10. Verfahren nach den Ansprüchen 1 bis 9, dadurch gekennzeichnet, dass bei dem als Tensid eingesetzten carboximethylierten Oxethylat das

Mischungsverhältnis des anionischen zum nichtionischen Tensid 100:0 bis 70:30 beträgt.

11. Verfahren nach Anspruch 8, dadurch gekennzeichnet, dass dem Formationswasser viskositätserhöhendes Polymer zugesetzt wird.

## Claims

1. A process for the recovery of largely emulsionfree oil from a subterranean deposit of medium or high salinity by forcing an emulsion in through an injection bore, characterised in that a carboxymethylated oxyethylate of the formula

$$R\text{-}(OCH_2CH_2)_n\text{-}OCH_2COOM$$

where R is a straight-chain or branched aliphatic radical of 6 to 20 carbon atoms or an optionally disubstituted alkylaromatic radical of 3 to 14 carbon atoms in the alkyl group, n is from 1 to 30 and M is an alkali metal or alkaline earth metal ion or ammonium, is used as emulsifier and is chosen so that the phase-inversion temperature of the subterranean oil/formation water/surfactant/optional additives system is from 0 to 10°C above the temperature of the deposit.

2. A process according to claim 1, characterised in that the phase inversion temperature of the crude oil/formation water/surfactant/optional additives system is from 1 to 5°C above the temperature of the deposit.

3. A process according to claim 1 or 2, characterised in that an emulsifier concentration of from 0.1 to 30%, based on the aqueous phase, is used.

4. A process according to any of claims 1 to 3, characterised in that the formation water is used as the aqueous phase of the emulsion and the crude oil of the deposit is used as the organic phase of the emulsion.

5. A process according to claim 4, characterised in that from 0.1 to 3% of soluble alkaline earth metal salt is charged to the formation water as additive.

6. A process according to any of claims 1 to 5, characterised in that the phase inversion temperature of the emulsion forced into the deposit is from 0 to 10°C above the temperature of the deposit.

7. A process according to any of claims 1 to 6, characterised in that from 0.05 to 4 pore volumes of formation water are forced into the deposit before the injection of the emulsion.

8. A process according to any of claims 1 to 7, characterised in that formation water is forced into the deposit after the injection of the emulsion.

9. A process according to any of claims 1 to 8, characterised in that for the carboxmethylated oxyethylate charged as surfactant the ratio of anionic to nonionic surfactant material present is from 100:0 to 40:60.

10. A process according to any of claims 1 to 9, characterised in that for the carboxymethylated oxyethylate charged as surfactant the ratio of anionic to nonionic surfactant material present is from 100:0 to 70:30.

11. A process according to claim 8, characterised in that a viscosity raising polymer is added to the formation water.

## Revendications

1. Procédé d'obtention de pétrole largement exempt d'émulsion à partir d'un gisement souterrain de salinité moyenne ou élevée, par envoi sous pression d'une émulsion dans un forage d'injection,

caractérisé par le fait qu'on utilise comme émulsifiant un produit d'oxéthylation carboxyméthylé de formule

$$R\text{-}(OCH_2CH_2)_n\text{-}OCH_2\text{-}COOM,$$

dans laquelle R représente un radical aliphatique linéaire ou ramifié comportant de 6 à 20 atomes de carbone ou un radical alkylaromatique éventuellement disubstitué qui comporte de 3 à 14 atomes de carbone dans le groupe alkyle, n a une valeur de 1 à 30 et M représente un ion de métal alcalin ou alcalino-terreux, ou de l'ammonium, ledit émulsifiant étant choisi de manière que la température d'inversion de phases du système pétrole du gisement/eau de formation/surfactif/éventuellement additifs se situe de zéro à 10°C au-dessus de la température du gisement.

2. Procédé selon la revendication 1,

caractérisé par le fait que la température d'inversion de phases du système pétrole brut/eau de formation/surfactif/éventuellement additifs se situe de 1 à 5°C au-dessus de la température du gisement.

3. Procédé selon les revendications 1 et 2, caractérisé par le fait qu'on utilise des concentrations en émulsifiant de 0,1 à 30%, relativement à la phase aqueuse.

4. Procédé selon les revendications 1 à 3, caractérisé par le fait qu'on utilise comme phase aqueuse de l'émulsion l'eau de formation et, comme phase organique, le pétrole brut du gisement.

5. Procédé selon la revendication 4, caractérisé par le fait qu'on utilise comme additifs des sels alcalino-terreux solubles dans l'eau de formation, à raison de 0,1 à 3%.

6. Procédé selon les revendications 1 à 5, caractérisé par le fait que la température d'inversion de phase de l'émulsion à injecter sous pression se situe de zéro à 10°C au-dessus de la température du gisement.

7. Procédé selon les revendications 1 à 6, caractérisé par le fait qu'avant l'injection de l'émulsion, on envoie sous pression dans le gisement de 0,05 à 4 volumes de pores d'eau de formation.

8. Procédé selon les revendications 1 à 7, caractérisé par le fait qu'après l'injection de l'émulsion, on envoie sous pression de l'eau de formation dans le gisement.

9. Procédé selon les revendications 1 à 8, caractérisé par le fait que dans le produit d'oxéthy-

lation carbo xyméthylé utilisé comme surfactif, la proportion de mélange entre le surfactif anionique et le surfactif non-ionique est de 100:0 à 40:60.

10. Procédé selon les revendications 1 à 9, caractérisé par le fait que dans l'oxéthylat carboxyméthylé utilisé comme surfactif, la proportion de mélange entre le surfactif anionique et le surfactif non-ionique est de 100:0 à 70:30.

11. Procédé selon la revendication 8, caracterisé par le fait qu'on ajoute à l'eau de formation un polymère élevant la viscosité.